# FASCICULE DE BREVET EUROPEEN

(11) **EP 1 926 168 B1**
(45) Date de publication et mention de la délivrance du brevet: **09.01.2013**
(21) Numéro de dépôt: 07121021.5
(22) Date de dépôt: 19.11.2007
(51) Int. Cl.: H01M 8/04

(54) **Unité de production d'énergie intégrant un brûleur et une pile à combustible**
Einheit zur Energieerzeugung mit einem Brenner und einer Brennstoffzelle
Energy production unit comprising a burner and a fuel cell

(30) Priorité: 24.11.2006 FR 0610332
(43) Date de publication de la demande: 28.05.2008
(73) Titulaire: GDF SUEZ, 92400 Courbevoie (FR); COMMISSARIAT A L'ENERGIE ATOMIQUE, 75015 Paris (FR)
(72) Inventeur: Hody, Stéphane, 94360 Bry sur Marne (FR); Fourmigue, Jean-François, 38600 Fontaine (FR)
(74) Mandataire: Bentz, Jean-Paul

(56) Documents cités:
- EP-A- 1 679 757
- WO-A-2005/038973
- WO-A-2006/072652
- JP-A- 62 136 774
- US-A1- 2003 134 168
- US-A1- 2004 229 096

## Description

L'invention concerne, de façon générale, les techniques de production d'énergie.

Plus précisément, l'invention concerne une unité de production d'énergie, notamment d'énergie électrique, comprenant une pile à combustible confinée dans une enceinte d'isolation thermique et une source de chaleur couplée thermiquement à la pile pour permettre au moins la montée en température de cette pile, cette source de chaleur comprenant au moins un premier brûleur radiant.

Des unités de ce type sont par exemple décrites dans les demandes de brevets US 2003/134168, WO 2006/072652, US 2004/229096, WO 2005/038973, et EP 1 679 757.

Bien qu'elles commencent à être connues de l'homme du métier, les unités de production d'énergie de ce type sont toujours associées à des contraintes de conception et d'exploitation, qui limitent pour l'instant leur développement technique et économique.

En particulier, dans la mesure où les piles à combustible ne peuvent fonctionner qu'après une montée en température à la fois lente et spatialement homogène, elles sont jusqu'à présent généralement chauffées par circulation d'un courant électrique dans une résistance, ce qui requiert le recours à une source de courant électrique avant même que la pile puisse en produire.

L'invention, qui se situe dans ce contexte, a notamment pour but de proposer une unité de production d'énergie exempte de ce défaut.

A cette fin, l'unité de production d'énergie de l'invention, par ailleurs conforme à la définition générique qu'en donne le préambule ci-dessus, est essentiellement caractérisée en ce que l'enceinte d'isolation thermique est chauffée par les gaz de combustion issus du premier brûleur, en ce que cette unité comprend en outre des moyens de régulation de température, propres à contrôler entre 200 °C et au moins 800 °C la température des gaz de combustion chauffant l'enceinte, et incluant un capteur de température de ces gaz de combustion, et en ce que l'enceinte est dotée d'au moins un écran radiatif protégeant cette enceinte du rayonnement infrarouge émis par le premier brûleur.

Ainsi, la pile à combustible utilisée dans l'unité de l'invention peut être mise en marche par consommation d'un combustible, par exemple du combustible utilisé dans la pile, sans requérir le recours à une source d'énergie électrique.

Les moyens de régulation peuvent notamment comprendre au moins un échangeur de chaleur, et / ou un variateur d'alimentation en mélange combustible du premier brûleur, alors par exemple constitué par un brûleur du type à combustion catalytique, et / ou une arrivée réglable d'air frais utilisé pour refroidir les gaz de combustion issus du premier brûleur avant qu'ils ne chauffent l'enceinte.

La pile à combustible est avantageusement du type à oxyde solide, de manière à supporter des températures élevées.

L'unité de production d'énergie de l'invention peut comprendre en outre des moyens de circulation de chaleur incluant un échangeur de chaleur et un circuit de chauffage, cette unité permettant alors la production simultanée de chaleur et d'électricité.

Dans ce cas, l'échangeur des moyens de régulation est par exemple monté en parallèle sur l'échangeur des moyens de circulation de chaleur.

L'unité de l'invention peut aussi comprendre un deuxième brûleur couplé thermiquement à l'échangeur des moyens de circulation de chaleur.

La pile est par exemple alimentée en gaz combustible, et cette unité comprend avantageusement une canalisation de recyclage dirigeant vers un brûleur le gaz combustible imbrûlé ressortant de la pile.

Pour assurer une optimisation de son rendement, l'unité de production d'énergie de l'invention peut aussi être dotée d'une canalisation de refroidissement dirigeant vers un échangeur les gaz brûlés ressortant de la pile.

D'autres caractéristiques et avantages de l'invention ressortiront clairement de la description qui en est faite ci-après, à titre indicatif et nullement limitatif, en référence aux dessins annexés, dans lesquels :
- la figure 1 est un schéma illustrant l'environnement immédiat de la pile à combustible utilisée dans une unité conforme à l'invention;
- la figure 2 est un schéma général illustrant un premier mode de réalisation possible d'une unité de production conforme à l'invention;
- la figure 3 est un schéma général illustrant un deuxième mode de réalisation possible d'une unité de production conforme à l'invention;
- la figure 4 est un schéma général illustrant un troisième mode de réalisation possible d'une unité de production conforme à l'invention; et
- la figure 5 est un schéma général illustrant un quatrième mode de réalisation possible d'une unité de production conforme à l'invention.

Comme annoncé précédemment, l'invention concerne une unité de production d'énergie comprenant une pile à combustible 1 propre à produire de l'énergie électrique et de préférence du type à oxyde solide, et une source de chaleur 2 couplée thermiquement à la pile 1 pour permettre au moins la montée en température de cette pile 1.

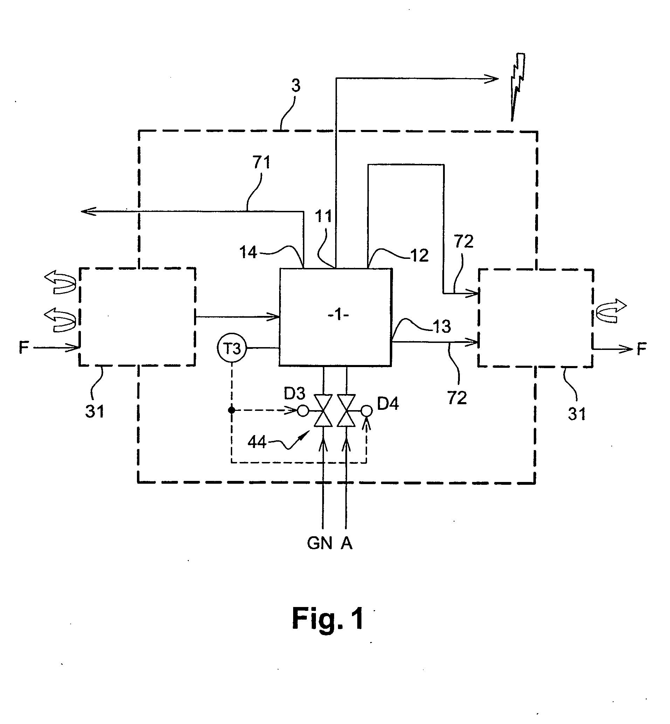

Selon l'invention, la source de chaleur 2 est essentiellement constituée par un brûleur radiant 20 et la pile 1 est confinée dans une enceinte d'isolation thermique 3 (figure 1) chauffée par les gaz de combustion F issus du brûleur 20.

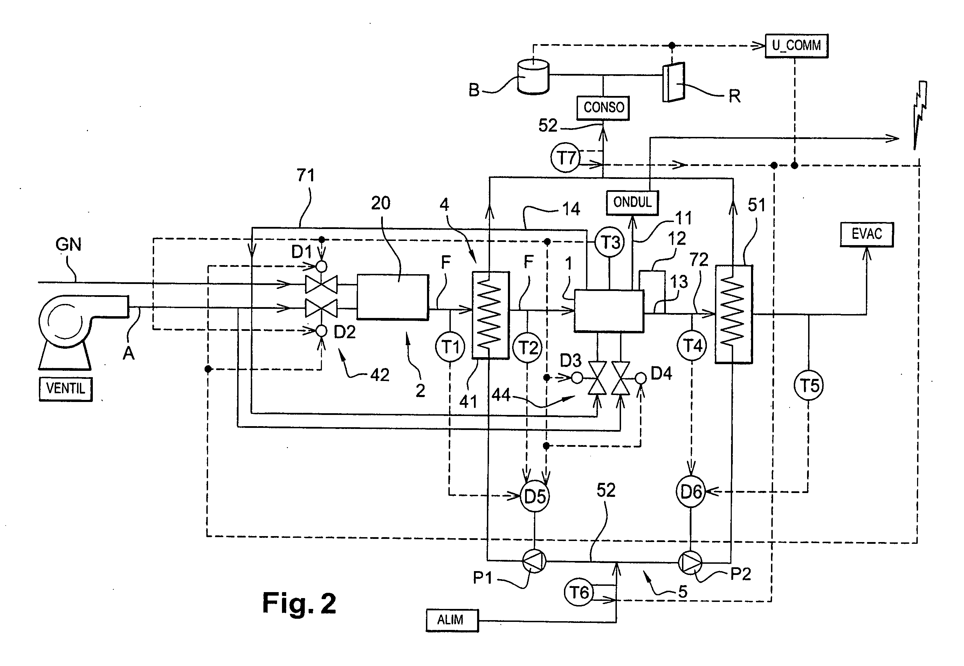

Par souci de clarté des figures, l'enceinte 3 enveloppant la pile 1 n'a pas, à dessein, été représentée sur les figures 2 à 5.

Pour pouvoir contrôler la température T3 de la pile 1, l'unité de production de l'invention comprend en outre des moyens de régulation de température 4 (figures 2 à 5), conçus pour contrôler entre environ 200 °C et par exemple 1100 °C la température T2 des gaz de combustion F chauffant l'enceinte 3, cette température étant au moins contrôlée jusqu'à 800 °C.

Le gradient de température au sein de la pile 1 peut être encore réduit en équipant l'enceinte 3 d'un ou plusieurs écrans radiatifs 31 dont la fonction est de protéger cette enceinte 3 du rayonnement infrarouge émis par le brûleur 20.

Les figures 2 à 5 représentent des modes de réalisation particulièrement avantageux de l'invention, dans lesquels l'unité de production de l'invention comprend des moyens de circulation de chaleur 5 incluant un échangeur de chaleur 51 et un circuit de chauffage 52, cette unité permettant alors la production simultanée d'électricité et de chaleur, notamment pour le chauffage de l'eau dans un ballon B d'eau chaude et / ou dans un ou plusieurs radiateurs R.

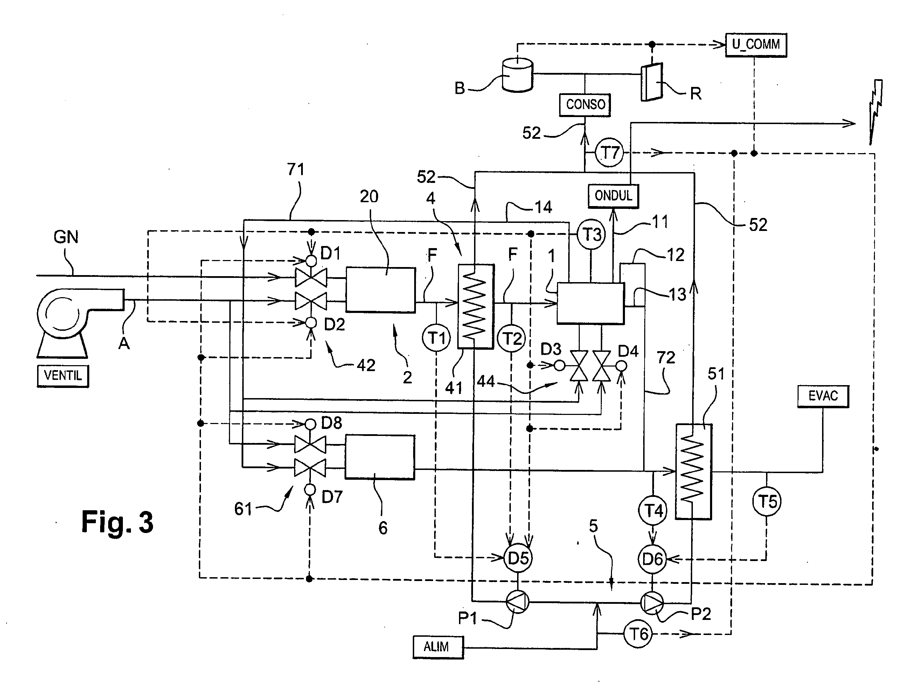

Dans le mode de réalisation des figures 2 et 3, les moyens de régulation 4 de température de la pile 1 comprennent au moins un échangeur de chaleur 41 essentiellement dédié à cette régulation.

Comme cependant l'unité de production de l'invention illustrée aux figures 2 à 5 a vocation à fournir non seulement de l'électricité mais aussi de la chaleur, les moyens de régulation 4 sont de préférence intégrés à un système de régulation plus complet, comprenant également une unité de commande U_COMM, des capteurs de température, et des valves de contrôle de débit, ces éléments étant reliés les uns aux autres par des liens de communication représentés en trait mixte.

L'unité de commande U_COMM recueille de la part des capteurs les informations constituées par les températures, telles que T1 à T8, mesurées en différents points de l'unité de production, et traite ces informations pour adapter les débits, tels que D1 à D6, en pilotant les différentes valves de contrôle de débit.

Dans le mode de réalisation de la figure 2, le brûleur 20 est alimenté en air A et en gaz combustible GN à travers des valves 42 qui jouent le rôle de variateur d'alimentation de ce brûleur en mélange combustible.

Le gaz combustible GN est admis dans le brûleur 20 à un débit D1 et l'air, propulsé par une ventilation VENTIL, est admis dans ce brûleur à un débit D2.

Les gaz de combustion F issus du brûleur 20, qui atteignent l'échangeur de chaleur 41 à une température T1, sont refroidis jusqu'à une température T2 par circulation d'eau dans l'échangeur 41 à un débit D5 variable, régulé par l'unité de commande U_COMM en fonction au moins de la température T1, de la température résiduelle T2 que les gaz de combustion F doivent idéalement avoir lorsqu'ils atteignent l'enceinte 3 pour la chauffer, et de la température T3 de la pile.

La pile 1 est elle-même alimentée en gaz combustible GN et en air A à travers des valves 44 qui jouent le rôle de variateur d'alimentation de cette pile, et à des débits respectifs D3 et D4.

La pile 1 présente une sortie 11 délivrant de l'électricité utilisable pour tout type d'application après mise en forme par un onduleur ONDUL.

La pile 1 comporte par ailleurs des sorties 12 et 13 reliées à une canalisation de refroidissement 72 qui dirige vers l'échangeur de chauffage 51 les gaz brûlés et chauds disponibles sur ces sorties de la pile 1, ces gaz étant ensuite évacués, en aval de l'échangeur 51, par un conduit EVAC.

La pile 1 comporte enfin une sortie 14 reliée à une canalisation de recyclage 71 qui redirige vers le brûleur 20 le gaz combustible partiellement imbrûlé ressortant de la pile 1 par cette sortie 14.

Dans le mode de réalisation des figures 2 et 3, le circuit 52 des moyens de chauffage 5 comprend typiquement une source ALIM d'alimentation en eau fraîche à une température T6, et des équipements CONSO de consommation d'eau chaude à une température T7, tels que des robinets, un ballon B d'eau chaude et des radiateurs R.

L'échangeur 41 servant à la régulation de la température de la pile 1 est par ailleurs intégré à ce circuit 52, dans lequel il est monté en parallèle avec l'échangeur de chauffage 51.

Le circuit de chauffage 52 comprend en outre deux pompes P1 et P2, dont les débits respectifs D5 et D6 sont régulés par l'unité U_COMM en fonction au moins des températures T1 et T2 en amont et en aval de l'échangeur de régulation 41, de la température T3 de la pile, des températures T4 et T5 en amont et en aval de l'échangeur de chauffage 51, et éventuellement de l'écart entre les températures T6 et T7 de l'eau froide et de l'eau chaude.

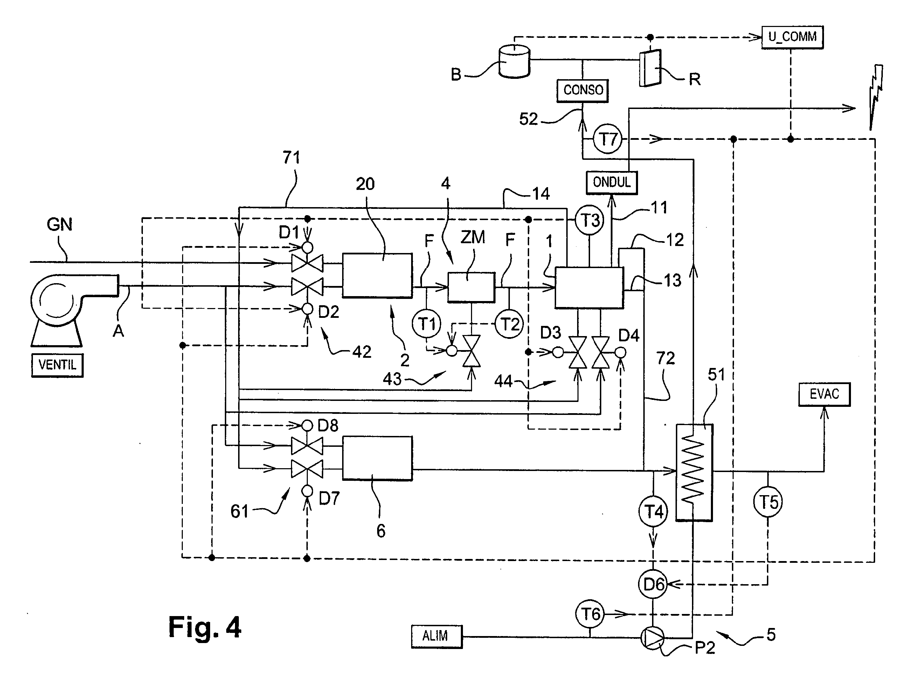

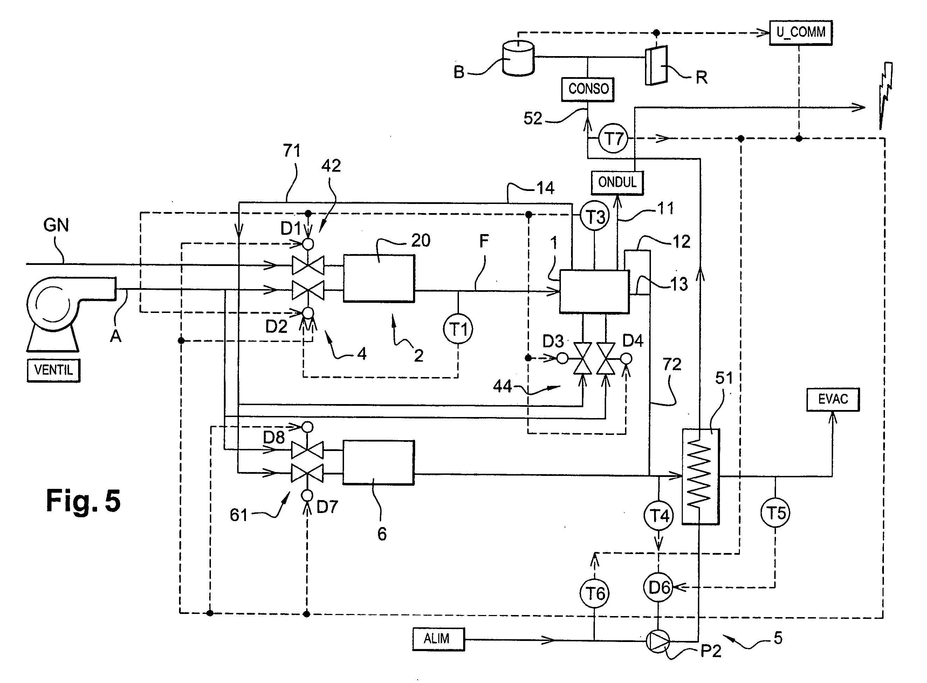

Le mode de réalisation illustré à la figure 3 se distingue du mode de réalisation illustré à la figure 2 par le fait qu'il intègre en outre, comme les modes de réalisation des figures 4 et 5, un deuxième brûleur 6 couplé thermiquement à l'échangeur de chauffage 51.

Ce brûleur supplémentaire 6 est alimenté en air A et en gaz combustible GN à travers des valves 61 qui jouent le rôle de variateur d'alimentation de ce brûleur en mélange combustible.

Les valves 61 sont pilotées par l'unité de commande U_COMM en fonction au moins des températures T6 et T7 de l'eau froide et de l'eau chaude, pour injecter le gaz combustible GN dans le brûleur 6 à un débit D7 et l'air, propulsé par la ventilation VENTIL, à un débit D8.

Le mode de réalisation illustré à la figure 4 se distingue du mode de réalisation illustré à la figure 3 par le fait qu'il utilise essentiellement, en tant que moyen de régulation 4, non pas un échangeur 41, mais une arrivée réglable d'air frais 43 permettant de refroidir les gaz de combustion F issus du brûleur 20 avant qu'ils ne chauffent l'enceinte 3.

Le débit d'air frais parvenant à la zone de mélange ZM avec les gaz de combustion F est contrôlé par une valve 43 elle-même pilotée par l'unité de commande U_COMM en fonction au moins des températures T1 et T2 en amont et en aval de la zone de mélange ZM, et de la température T3 de la pile.

Pour mettre en oeuvre le mode de réalisation de la figure 4, il est préférable de recourir à l'emploi, en tant que brûleur 20, d'un brûleur catalytique dont les gaz de combustion F présentent une température T1 réglable jusqu'à une valeur relativement basse, par exemple au plus égale à 600 °C.

Avec de tels brûleurs catalytiques, il est également envisageable de mettre en oeuvre le mode de réalisation illustré à la figure 5, qui se distingue du mode de réalisation précédent par le fait qu'il n'utilise, en tant que moyens de régulation 4, que les valves d'alimentation 42 du brûleur 20.

Dans ce cas, et compte tenu de l'absence de l'échangeur 41 et de la zone de mélange ZM, la température T2 des gaz de combustion atteignant l'enceinte 3 de la pile 1 se confond avec la température T1 des gaz de combustion à la sortie du brûleur 20.

## Revendications

1. Unité de production d'énergie, notamment d'énergie électrique, comprenant une pile à combustible (1) confinée dans une enceinte d'isolation thermique (3) et une source de chaleur (2) couplée thermiquement à la pile (1) pour permettre au moins la montée en température de cette pile (1), cette source de chaleur (2) comprenant au moins un premier brûleur radiant (20), **caractérisée en ce que** l'enceinte d'isolation thermique (3) est chauffée par les gaz de combustion (F) issus du premier brûleur (20), **en ce que** cette unité comprend en outre des moyens de régulation de température (4), propres à contrôler entre 200 °C et au moins 800 °C la température des gaz de combustion (F) chauffant l'enceinte (3) et incluant un capteur de température (T1, T2) de ces gaz de combustion (F), et **en ce que** l'enceinte (3) est dotée d'au moins un écran radiatif (31) protégeant cette enceinte (3) du rayonnement infrarouge émis par le premier brûleur (20).

2. Unité suivant la revendication 1, **caractérisée en ce que** les moyens de régulation (4) comprennent au moins un échangeur de chaleur (41).

3. Unité suivant l'une quelconque des revendications précédentes, **caractérisée en ce que** les moyens de régulation (4) comprennent un variateur d'alimentation (42) du premier brûleur (20) en mélange combustible.

4. Unité suivant la revendication 3, **caractérisée en ce que** le premier brûleur (20) est du type à combustion catalytique.

5. Unité suivant l'une quelconque des revendications précédentes, **caractérisée en ce que** les moyens de régulation (4) comprennent une arrivée réglable d'air frais (43) utilisé pour refroidir les gaz de combustion (F) issus du premier brûleur (20) avant qu'ils ne chauffent l'enceinte (3).

6. Unité suivant l'une quelconque des revendications précédentes, **caractérisée en ce que** la pile à combustible (1) est du type à oxyde solide.

7. Unité suivant l'une quelconque des revendications précédentes, **caractérisée en ce qu'**elle comprend en outre des moyens de circulation de chaleur (5) comprenant un échangeur de chaleur (51) et un circuit de chauffage (52), cette unité permettant la production simultanée de chaleur et d'électricité.

8. Unité suivant les revendications 2 et 7, **caractérisée en ce que** l'échangeur (41) des moyens de régulation (4) est monté en parallèle sur l'échangeur (51) des moyens de circulation de chaleur (5).

9. Unité suivant l'une quelconque des revendications précédentes combinée à la revendication 7, **caractérisée en ce qu'**elle comprend un deuxième brûleur (6) couplé thermiquement à l'échangeur (51) des moyens de circulation de chaleur (5).

10. Unité suivant l'une quelconque des revendications précédentes, **caractérisée en ce que** la pile (1) est alimentée en gaz combustible, et **en ce que** cette unité comprend en outre une canalisation de recyclage (71) dirigeant vers un brûleur (20) le gaz combustible imbrûlé ressortant de la pile (1).

11. Unité suivant l'une quelconque des revendications précédentes, **caractérisée en ce qu'**elle comprend en outre une canalisation de refroidissement (72) dirigeant vers un échangeur (51) les gaz brûlés ressortant de la pile (1).

## Claims

1. Energy production unit, for electric energy in particular, comprising a fuel cell (1) confined in a thermal insulation enclosure (3) and a heat source (2) thermally coupled to the fuel cell (1) at least to allow the rise in temperature of this fuel cell (1), this heat source (2) comprising at least a first radiating burner (20), **characterized in that** the thermal insulation enclosure (3) is heated by the combustion gases (F) derived from the first burner (20), **in that** this unit also comprises temperature regulation means (4) able to control, from 200°C to at least 800°C, the temperature of the combustion gases (F) heating the enclosure (3) and including a temperature sensor (T1, T2) of these combustion gases (F), and **in that** the enclosure (3) is provided with at least one radiation shield (31) protecting the enclosure (3) against infrared radiation emitted by the first burner (20).

2. Unit according to claim 1, **characterized in that** the regulating means (4) comprise at least one heat exchanger (41).

3. Unit according to any one of the preceding claims, **characterized in that** the regulation means (4) comprise a variable feed controller (42) for the supply of fuel mix to the first burner (20).

4. Unit according to claim 3, **characterized in that** the first burner (20) is of catalytic combustion type.

5. Unit according to any one of the preceding claims, **characterized in that** the regulation means (4) comprise an adjustable cold air inlet (43) used to cool the combustion gases (F) derived from the first burner (20) before they heat the enclosure (3).

6. Unit according to any one of the preceding claims, **characterized in that** the fuel cell (1) is of solid oxide type.

7. Unit according to any one of the preceding claims, **characterized in that** it also comprises heat circulation means (5) comprising a heat exchanger (51) and a heating circuit (52), this unit allowing the simultaneous production of heat and electricity.

8. Unit according to claims 2 and 7, **characterized in that** the exchanger (41) of the regulation means (4) is mounted in parallel with the exchanger (51) of the heat circulation means (5).

9. Unit according to any one of the preceding claims combined with claim 7, **characterized in that** it comprises a second burner (6) thermally coupled to the exchanger (51) of the heat circulation means (5).

10. Unit according to any one of the preceding claims, **characterized in that** the fuel cell (1) is supplied with combustible gas, and **in that** this unit also comprises a recycling channel (71) directing non-burnt combustible gas, leaving the fuel cell (1), towards a burner (20).

11. Unit according to any one of the preceding claims, **characterized in that** it also comprises a cooling channel (72) directing the burnt gases leaving the fuel cell (1) towards an exchanger (51).

## Patentansprüche

1. Einheit zur Energieerzeugung, insbesondere elektrischer Energie, umfassend eine Brennstoffzelle (1), die in einem Wärmeisolierraum (3) angeordnet ist, und eine Wärmequelle (2), die thermisch an die Zelle (1) gekoppelt ist, um mindestens den Temperaturanstieg dieser Zelle (1) zu ermöglichen, wobei diese Wärmequelle (2) mindestens einen ersten Strahlungsbrenner (20) umfasst, **dadurch gekennzeichnet, dass** der Wärmeisolierraum (3) durch die Brenngase (F), die vom ersten Brenner (20) kommen, erwärmt wird, dass diese Einheit ferner Temperaturregelungsmittel (4) umfasst, die geeignet sind, zwischen 200 °C und mindestens 800 °C die Temperatur der Brenngase (F), die den Raum (3) erwärmen, zu kontrollieren, und einen Temperaturfühler (T1, T2) für diese Brenngase (F) umfassen, und dass der Raum (3) mit mindestens einem Strahlungsschirm (31) versehen ist, der diesen Raum (3) vor der Infrarotstrahlung, die vom ersten Brenner (20) ausgesandt wird, schützt.

2. Einheit nach Anspruch 1, **dadurch gekennzeichnet, dass** die Regelungsmittel (4) mindestens einen Wärmetauscher (41) umfassen.

3. Einheit nach einem der vorhergehenden Ansprüche, **dadurch gekennzeichnet, dass** die Regelungsmittel (4) einen Versorgungsvariator (42) des ersten Brenners (20) mit Brennstoffgemisch umfassen.

4. Einheit nach Anspruch 3, **dadurch gekennzeichnet, dass** der erste Brenner (20) vom Typ mit katalytischer Verbrennung ist.

5. Einheit nach einem der vorhergehenden Ansprüche, **dadurch gekennzeichnet, dass** die Regelungsmittel (4) eine einstellbare Frischluftzufuhr (43) umfassen, die verwendet wird, um die Brenngase (F), die aus dem ersten Brenner (20) kommen, zu kühlen, bevor sie den Raum (3) erwärmen.

6. Einheit nach einem der vorhergehenden Ansprüche, **dadurch gekennzeichnet, dass** die Brennstoffzelle (1) vom Typ mit festem Oxid ist.

7. Einheit nach einem der vorhergehenden Ansprüche, **dadurch gekennzeichnet, dass** sie ferner Wärmezirkulationsmittel (5) besitzt, umfassend einen Wärmetauscher (51) und eine Heizschaltung (52), wobei diese Einheit die gleichzeitige Erzeugung von Wärme und Elektrizität ermöglicht.

8. Einheit nach einem der Ansprüche 2 und 7, **dadurch gekennzeichnet, dass** der Wärmetauscher (41) der Regelungsmittel (4) parallel auf dem Wärmetauscher (51) der Wärmezirkulationsmittel (5) montiert ist.

9. Einheit nach einem der vorhergehenden Ansprüche in Kombination mit Anspruch 7, **dadurch gekennzeichnet, dass** sie einen zweiten Brenner (6) umfasst, der thermisch mit dem Wärmetauscher (51) der Wärmezirkulationsmittel (5) gekoppelt ist.

10. Einheit nach einem der vorhergehenden Ansprüche, **dadurch gekennzeichnet, dass** die Zelle (1) mit Brenngas versorgt wird, und dass diese Einheit ferner einen Wiedergewinnungskanal (71) umfasst, der das nicht verbrannte Brenngas, das aus der Zelle (1) austritt, zu einem Brenner (20) leitet.

11. Einheit nach einem der vorhergehenden Ansprüche, **dadurch gekennzeichnet, dass** sie ferner einen Kühlkanal (72) umfasst, der die aus der Zelle (1) austretenden verbrannten Gase zu einem Wärmetauscher (51) leitet.
